# EUROPEAN PATENT SPECIFICATION

(11) **EP 0 628 242 B1**
(45) Date of publication and mention of the grant of the patent: **16.08.2001**
(21) Application number: 94304117.8
(22) Date of filing: 08.06.1994
(51) Int. Cl.: A01G 3/06, A01D 34/84

(54) **Lawn edger**
Rasenkantenschneider
Tondeuse de bordures de gazon

(30) Priority: 09.06.1993 AU 929893; 13.05.1994 AU 6310394
(43) Date of publication of application: 14.12.1994
(73) Proprietor: Notaras, John Arthur, Strathfield, New South Wales 2135 (AU); Notaras, Angelo Lambrinos, Bellevue Hill, New South Wales 2039 (AU)
(72) Inventor: Notaras, John Arthur, Strathfield, New South Wales 2135 (AU); Notaras, Angelo Lambrinos, Bellevue Hill, New South Wales 2039 (AU)
(74) Representative: Perry, Robert Edward

(56) References cited:
- CH-A- 520 461
- DE-A- 4 223 764
- GB-A- 1 153 426
- US-A- 3 130 793
- US-A- 4 936 886
- US-A- 4 984 417

## Description

The present invention relates to powered lawn edgers. In particular, the present invention relates to a safe, compact, streamlined, and extremely manoeuvrable powered lawn edger which is steerable with both hands in the manner of a wheelbarrow.

Powered lawn edgers can be divided into several categories. One category is of hand-held devices which do not normally have any ground-engaging wheels and which are carried by the operator. The best known of these devices are the various types of brush cutter or trimming devices, in which the cutter head rotates about a substantially horizontal plane in normal use. Therefore, in order to trim the edge of a lawn adjacent a footpath, for example, it is necessary for such a device to be completely carried whilst being twisted by approximately 90° about its longitudinal axis. This is both difficult and tiring to execute.

Another category of powered lawn edgers is of multiwheeled carriages, supported on wheels, and which are pushed along their intended path. The best known member of this category is essentially a conventional domestic lawn mower-type, but with a cutting element rotating in a vertical plane.

CH-A-0520461 discloses a powered mowing machine steerable by an operator with both hands in the manner of a wheelbarrow, the machine comprising:
an elongate member; a handle including grips; a ground-engaging wheel; a cutting device; a power unit; and a power train;
wherein the handle is attached adjacent one end of the member, the cutting device is mounted adjacent the other end, forward of the ground-engaging wheel, the power unit is carried by the member and is located in front of an operator holding the grips, and the power train interconnects the power unit and the cutting device and is enclosed by the member.

According to the present invention, in a powered machine of the type described immediately above, the cutting device is rotatable in a plane parallel to the longitudinal axis of the elongate member, so that the machine can be used as a lawn edger, the ground-engaging wheel is adjacent said other end of the member, the machine's centre of gravity is intermediate the grips and the ground-engaging wheel, and the handle can be manipulated to twist the machine about said longitudinal axis, to tilt the cutting device with respect to its vertical plane of rotation.

The machine of the invention can be operated without great effort. An edger of the invention has a negligible turning circle, can be tilted easily to either side, and yet supports a substantial part of its weight. In addition, the arrangement should enable weight (or downward force) to be concentrated at the cutter blade so as to improve stability.

Preferred aspects of the invention are defined in the subclaims.

A preferred embodiment of the present invention will first be described and then a number of variations to that preferred embodiment will be described, the description being with reference to the accompanying drawings in which:
Fig. 1 is a front perspective view of the left hand side of the hand steerable powered edger of the preferred embodiment,
Fig. 2 is a front perspective view of the right hand side of the edger of Fig. 1 in use,
Fig. 3 is a schematic plan view of the edger of Figs. 1 and 2 in use,
Fig. 4 is a side view of the edger of Figs. 1-3 in a stable non-use position,
Fig. 5 is an exploded perspective view showing a substantially vibration free mounting for the handles,
Fig. 6 is a cross-sectional view through the clutch mechanism along the line VI-VI of Fig. 4,
Fig. 7 is an end view of the clutch mechanism in the direction of arrow VII in Fig. 6,
Fig. 8 is a longitudinal cross-sectional view through the throttle control,
Fig. 9 is a side view of the throttle control but looking in the opposite direction to the view of Fig. 8,
Figs. 10-14 are schematic end elevations of the device of Figs. 1-4 in use,
Figs. 15-17 illustrate three further embodiments having differing handles, and
Figs. 18-20 illustrate three different ground engaging wheel configurations.

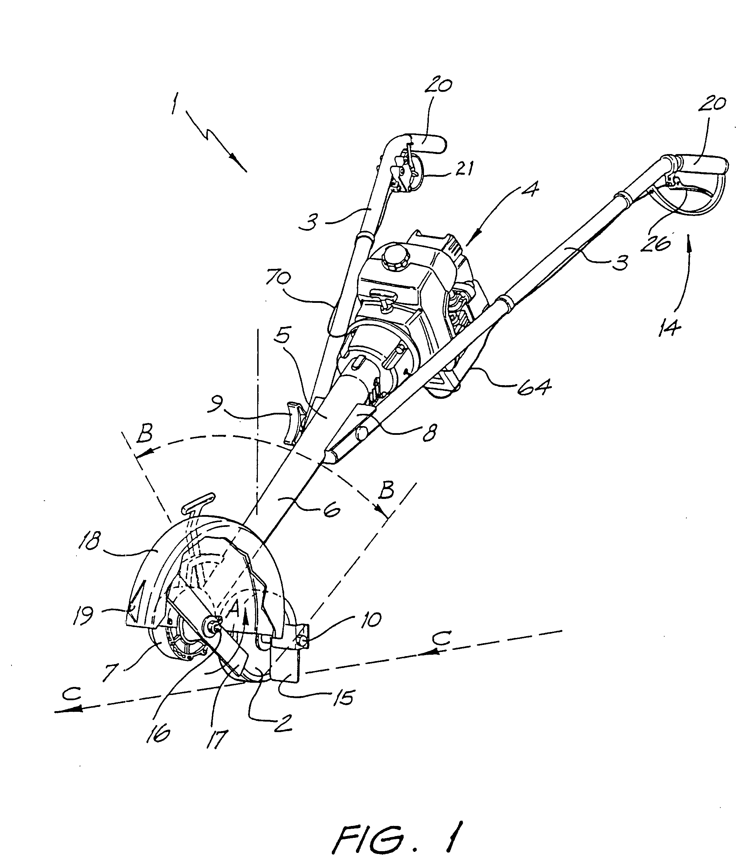

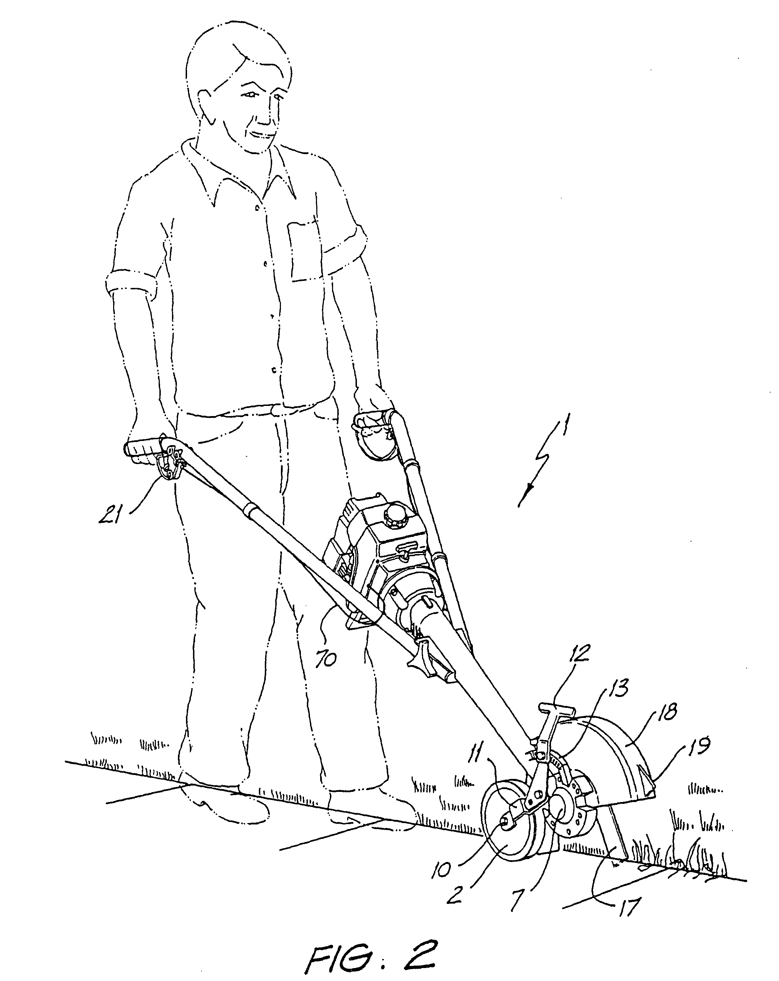

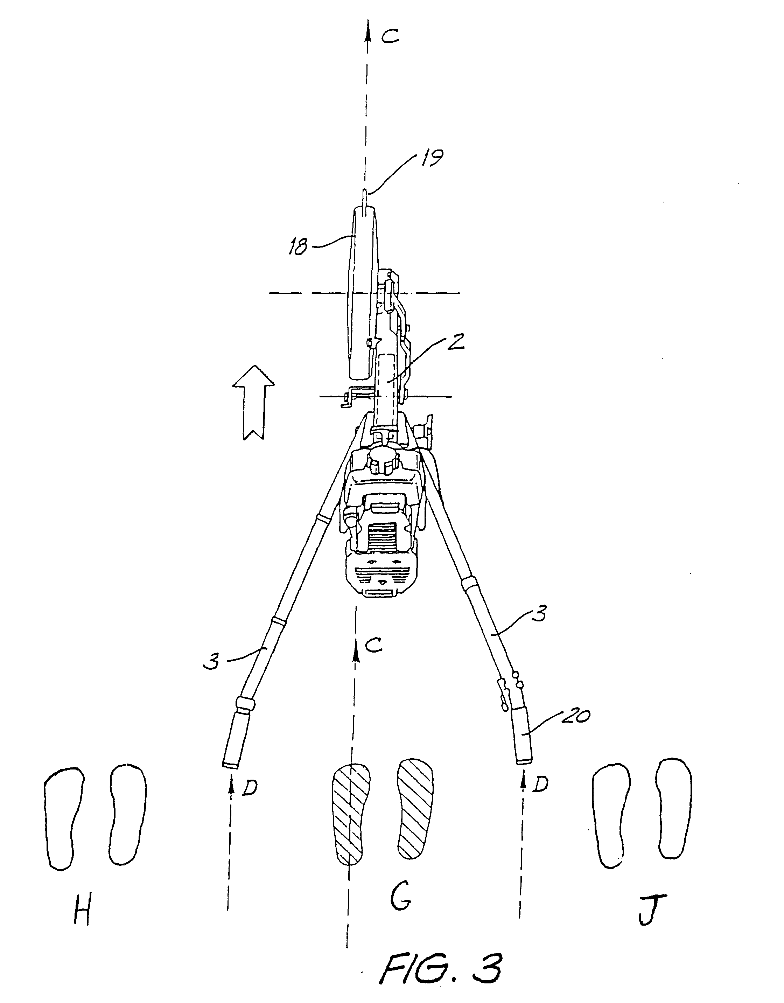

As seen in Figs. 1 and 2, the edger 1 of the preferred embodiment takes the form of a slender wheel barrow like device having a single ground engaging wheel 2 of appreciable diameter, a pair of handle bars or handles 3 with hand grips 20 and a power unit or motor 4, all arranged about a generally elongate narrow frame 5. The wheel 2 has a sufficiently large diameter to enable the edger 1 to be easily rolled like a wheelbarrow including rolling over steps, rough terrain, lawn, tangled grass, garden bed peripheries, etc. The wheel 2 is below the elongated frame 5 and preferably (as illustrated in Fig. 3) on, or close to, the longitudinal centre line of the edger 1.

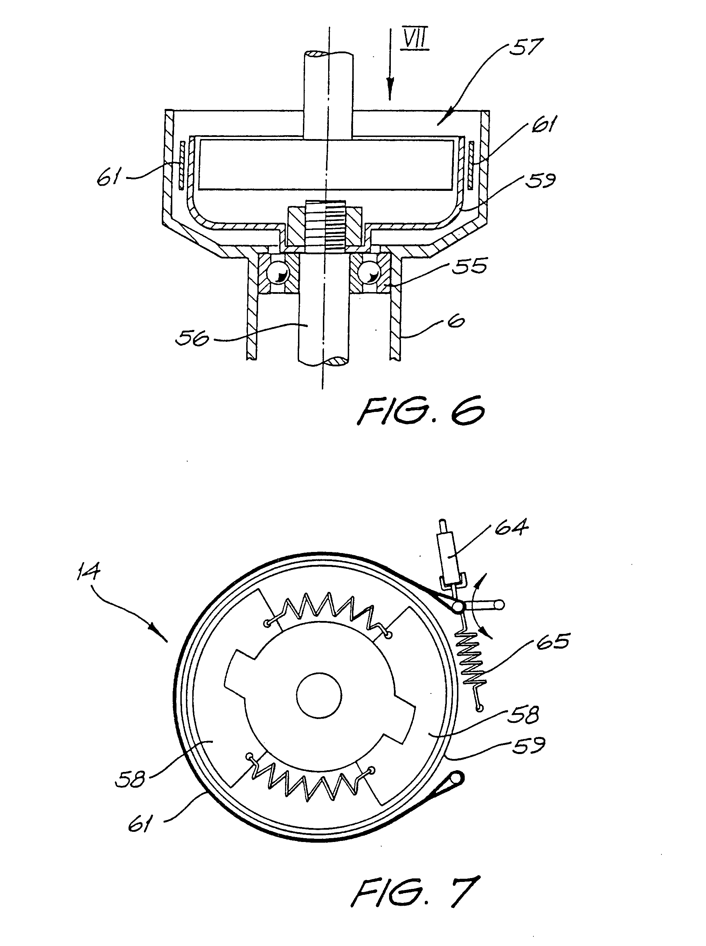

The motor 4 can be either an electric motor or any type of internal combustion engine. The motor 4 is positioned in front of the operator and is mounted at the head of the transmission frame 5 and is generally provided with a conventional speed dependent centrifugal clutch 57 (illustrated in Fig. 6). A drive shaft 56 (also illustrated in Fig. 6) passes through the hollow stem 6 of the frame 5 to a ninety degree reduction gear box 7.

The frame 5 also has two wedge shaped receptors 8 to which the handle bars 3 are releasably secured by means of a releasable handle 9. The frame 5 and handles 3 have a generally Y-shaped configuration. The handles 3 are preferably detachable so as to place the edger in a transport or storage configuration having a reduced overall length. The entire edger 1 is able to be easily placed in the boot or trunk of even a small motor vehicle.

Extending from the outer housing of the gear box 7 is a pivoted arm 11 (Fig. 2) on the free end of which the wheel 2 is rotatably mounted. The arm 11 is pivotal by means of a resilient height adjustment handle 12 which is biased so as to be able to be set by the operator and retained in a position setting in any one of a number of positions relative to a height setting plate 13 which includes a number of apertures.

Extending from the gear box 7 is a shaft 16 (Fig. 1) which carries an actuator in the form of a single cutter blade 17 which is shielded by a guard 18. On the leading end of the guard 18 is mounted a foresight 19. The cutter blade 17 and shaft 16 are a fixed distance from the engine 4.

The gear box 7 provides a gear reduction (between 1.5:1 and upto about 8:1) but preferably around 4:1 with an engine of, say, 30 cc capacity. Because of the low gear ratio the peripheral speed at the tips of the cutter blade 17 is kept low, even at engine speeds of upto 10,000 rpm if using, say, a 20 cc capacity engine. If a large capacity engine of, say, 50 cc capacity is utilised, then that engine has more power and therefore can rotate the large blade 17 at slower engine speeds using a gear ratio in the vicinity of, say, 2:1 or even 1.5:1.

Because of the slower blade peripheral speed, a longer blade 17, which takes a longer time to wear out, is able to be used. The blade 17 is longer than those blades used on heavy duty carriage edgers, and is certainly much longer than the short blades used on light duty wheeled brush cutter type edgers and the light duty wheeled carriage class of edgers. A longer blade 17 also has the advantage of "pulling" the lightweight edger 1 along and thus makes the edger 1 self propelling to some extent at least.

It will be apparent to those skilled in the art that the handle 12 and plate 13 permit the height above the ground of the blade 17 to be adjusted for any given angle of inclination of the transmission frame 5 relative to the ground by the raising or lowering of the gear box 7. Thus, although the operator is able to raise or lower the handles 3 and thereby tilt the transmission frame 5 in a small arc within a vertical plane about the point of engagement of the wheel 2 with the ground, this adjustment is small. The fundamental height setting is adjusted by the height: adjustment mechanism in the form of the arm 11, handle 12 and plate 13. This enables the height to be set by each operator. This setting is used to determine the depth of cut by the blade 17 into the lawn and/or soil surface. This adjustment also allows for compensation for the shorter length of a worn blade 17 and/or the different heights and/or arm lengths of different operators. Also the step-by-step height adjustment cannot change during use as do sliding adjustments which rely upon friction to clamp the slide in position.

In addition, the extended stub axle 10 carried on the free end of the arm 11, and about which the wheel 2 rotates, carries a debris deflector 15. Unlike the cutter guard 18 which is raised or lowered with the height adjustment mechanism 12 and 13, the debris deflector 15 remains at a constant height relative to the ground surface. Preferably the debris deflector 15 is rigid and is able to pivot about the axle 10 (for example to swing over lumps of tangled grass) and hangs down in the position illustrated in Fig. 1 under the influence of its own weight. The lower edge of the debris deflector 15 reaches ground level, or near to ground level. If desired, a spring (or equivalent conventional mechanism not illustrated) can be used to urge the deflector 15 back into its substantially vertical rest position. Thus the debris deflector 15 is always at a constant height and/or position relative to the ground surface, regardless of the height adjustment set by the handle 12. This is to be contrasted with prior art rubber flaps which hang from guards for cutter blades and thus move with the height adjustment mechanism being raised, or drag severely on the ground when lowered. The debris deflector 15 functions to protect the operator from flying stones or debris that can pass below the cutter blade guard 18 as the cutter blade rotates in the direction of arrow A in Fig. 1. Alternatively a flexible debris deflector flap can be used, with one end of the flap affixed in any conventional way to the wheel stub axle 10.

Both the debris deflector 15 and guard 18 stop the ascent of dust, grit, grass cuttings and other flying debris thrown up by the cutter blade 17. As a consequence, the operation of the edger 1 is not only rendered more safe for the operator, but dust is less likely to enter into the engine or motor 4 thereby prolonging engine life.

As indicated in Fig. 1, the engine 4 has a throttle control 21 and, if desired, a brake 14 which is connected via a cable to the engine 4. The brake 14 is released by grasping the brake lever 26 against the corresponding handle grip 20.

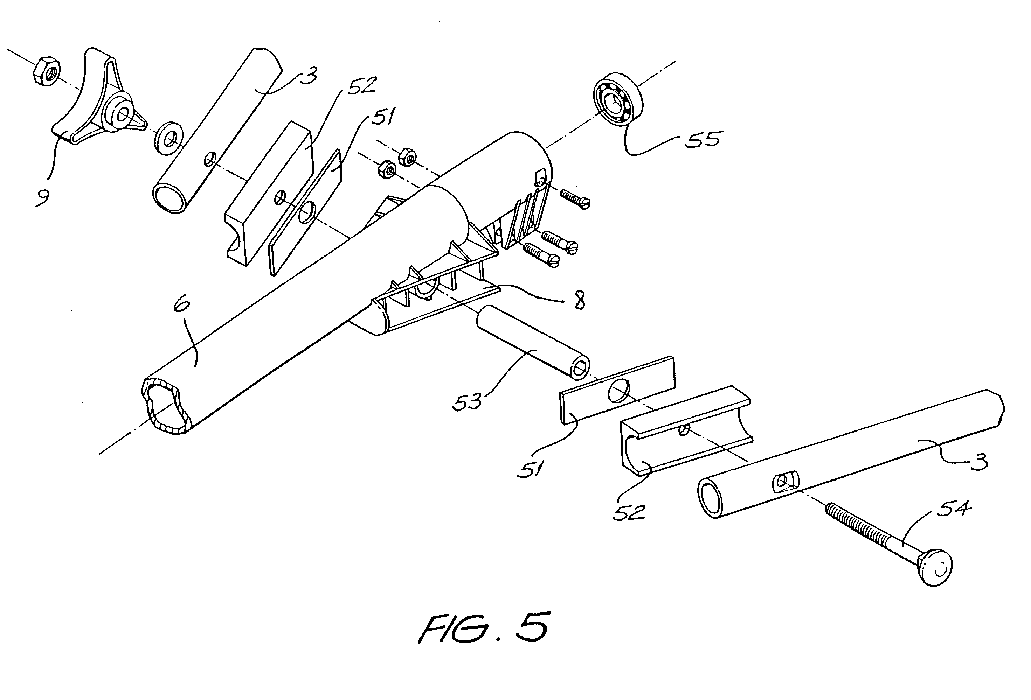

Turning now to Fig. 5, the detail of an anti-vibration mounting for the handles 3 is illustrated. The stem 6 is provided with two moulded plastic wedge shaped receptors 8. A steel skin 51 is positioned between each receptor 8 and a corresponding U-shaped rubber channel 52 into which the handles 3 are recevied. A rubber sleeve 53 passes through the stem 6, receptors 8 and skins 51. A bolt 54 passes through the handles 3, channels 52, skins 51 and sleeve 53 and is able to function as a clamp by tightening of handle 9 into which the bolt 54 is received.

As also seen in both Fig. 5 and 6, the upper end of the stem 6 carries a bearing 55 for a, preferably solid, transmission shaft 56 which interconnects a centrifugal clutch 57 with the gear box 7 (Fig. 2). The clutch 57 has a substantially conventional pair of spring loaded shoes 58 (Fig. 7) which under the influence of centrifugal force when rotating engage the clutch drum 59. This engagement transmits power from the engine 4 to the shaft 56. Preferably a brake 14 in the form of a brake band 61 which extends around the clutch drum 59, is provided. The brake band 61 is connected to the brake lever 26 (Fig. 1) by means of a cable 64.

The brake 14 is biassed on by means of a spring 65 which pulls the brake band 61 into engagement with the exterior of the clutch drum 59. The brake 14 is released by grasping the brake lever 26 against the adjacent handle grip 20. This pulls the cable 64 against the spring 65 thereby freeing the brake band 61 as illustrated in Figs. 6 and 7.

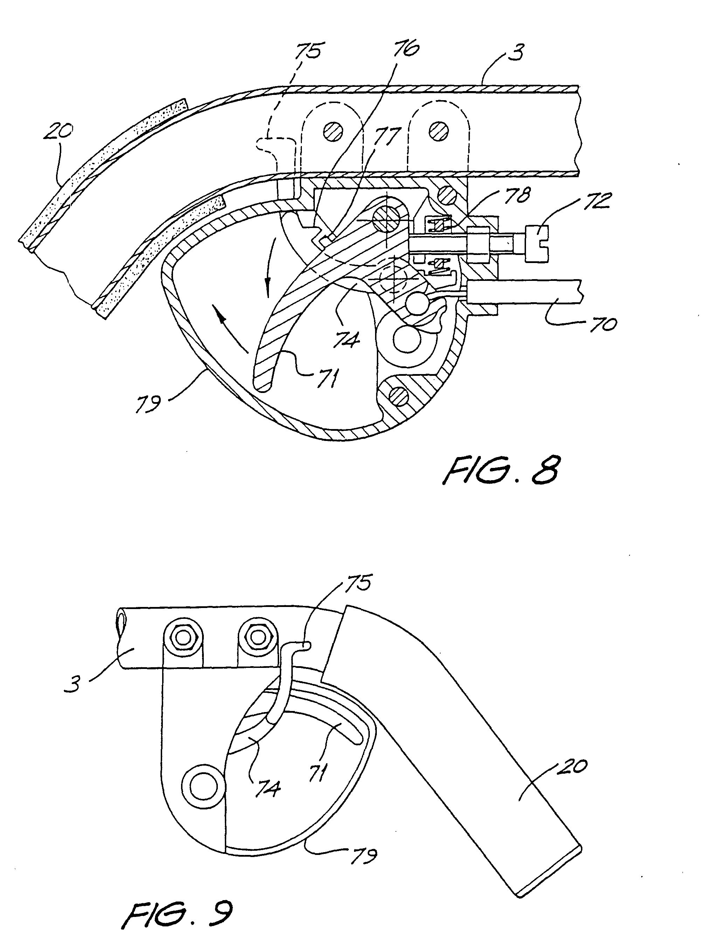

The details of the throttle control (which is right handed) are illustrated in Figs. 8 and 9. The throttle of the engine is controlled by a cable 70 which is able to be pulled by rotating a throttle trigger 71 clockwise as seen in Fig. 8. The idle speed is controlled by setting screw 72.

However, before the throttle trigger can be moved to increase engine speed above idling, an interlock lever 74 must be momentarily moved in an anticlockwise direction as seen in Fig. 8. This movement is brought about by the operator's right thumb which engages the free end 75 of the interlock lever 74.

The interlock lever 74 is provided with a lug 76 which, in the rest position of the interlock lever 75, engages a similar protrusion 77 on the throttle trigger 71, thereby preventing movement of the throttle tirgger 71. As a consequence, the operator must first depress the interlock lever 75 with his right thumb before being able to pivot the throttle trigger with his right index finger. Once the throttle trigger moves away from its idle position, a return spring 78 resets the interlock lever 74 into its initial position. This is the position illustrated in Fig. 9. Thus the trigger 71 can be moved to increase or decrease engine speed so long as the engine 4 is not idled. If the trigger 71 is returned to the idle position, then the lug 76 and protrusion 77 are re-engaged. As a result, the engine speed cannot be increased again without the interlock lever 74 being depressed. The throttle control 21 also has a stirrup guard 79 to prevent the trigger 71 being bumped whilst the engine 4 is operating. Clearly, for a left hand throttle, the interlock lever 74 should be placed on the opposite side of the throttle trigger 71 so as to be accessible by the left thumb.

It will be apparent to those skilled in the art from Figs. 2 and 3, in particular, that the edger 1 of the preferred embodiment is mechanically similar to a slender wheel barrow, in that the centre of gravity of the edger 1 is positioned in a substantially vertical plane located between the handles 3, and is also positioned between the wheel 2 and the handles 3. As a consequence of this arrangement, the greater part of the weight of the edger 1 is borne by the wheel 2 and only a small part is supported by the operator. In addition, in operation the edger 1 is subjected to forces at only three locations, the wheel 2 and both handles 3. This makes for a very stable arrangement.

Furthermore, because the shaft of the cutter blade 17 is a very short radial distance from the shaft of the wheel, even though the edger 1 is light in terms of its overall weight, the leverage between the cutter blade 17 and the wheel 2 is very substantial. This prevents blade bounce and furthermore improves the stability of the edger 1 in operation.

However, the edger 1 of the preferred embodiment differs from a conventional wheelbarrow in relation to the position of the centre of gravity relative to the frame of the edger. In a conventional wheelbarrow, especially one carrying a heavy load such as wet concrete, the centre of gravity is above the frame. Thus if one handle is lowered, and/or the other raised, an inherently unstable position is quickly reached and the operator may be unable to prevent the load spilling out sideways as the wheelbarrow rotates about its longitudinal axis.

This is to be contrasted with the above described embodiment, where the centre of gravity (determined to a certain extent by the position of the engine 4) lies on, or close to, the longitudinal axis of the frame 5. This has the result that the mass is basically concentrated along the longitudinal axis of the frame and only the handles diverge from this axis to any considerable extent. Thus the handle grips 20 can be comfortably moved laterally in a fully controlled arc about the longitudinal axis of the frame 5 without the edger 1 becoming unstable in any way. This makes for particularly easy tilting of the edger 1 in order to quickly and precisely tilt the cutter blade 17 into any desired cutting angle by any operator and without any difficulty.

Because of the slender wheelbarrow-like configuration of the edger 1, like a wheel barrow the edger 1 has no minimum turning circle and can be turned through 360° on a spot. The edger 1 can also be steered by moving the handles 3 to left or right about a vertical axis passing through the wheel 2. In operation, by lifting one of the handles 3 and/or lowering the other handle, the handles 3 are thereby easily twisted about the longitudinal axis of the stem 6. This lateral tilting or twisting action through a short arc moves the plane in which the cutter blade 17 rotates from the vertical as indicated by the arrows B in Fig. 1. This movement is able to be achieved quickly and easily by the operator in response to changing conditions, any obstacle, etc. The closer the blade 17 to the longitudinal axis of the edger, the easier the movement of the handle grips 20 in order to achieve a given effective tilt of the cutter blade 17.

As indicated in Figs. 2 and 3, as the operator normally is positioned directly behind the edger 1 (indicated as position G in Fig. 3), and operates by walking in a natural stance forward along the line of cut indicated by arrows C in Figs. 1 and 3. This natural stance enables the operator to work for long periods without tiring. Since the operator is not stooped, and has a straight back, the operator can work without fear that serious back injury may eventually occur.

It will be apparent to those skilled in the art that as the operator walks along in a straight line path, the plane in which the cutter blade 17 rotates lies within the distance between the shoulders of the operator as the operator moves along the path C. Considered another way, each shoulder of the operator thus traces out a locus or path indicated by arrows D in Fig. 3 to either side of the cutter blade 17.

From Fig. 2 it is also apparent to those skilled in the art, that the cutter blade 17 and guard 18, being located close to the ground, can be extended underneath low lying bushes without difficulty and without other parts of the edger 1 striking the bushes.

Also because the edger 1 is light and well balanced, the operator can be comfortably positioned to either side of both handles for any reason, for example, to allow the edger to edge under overhanging bushes or trees where a directly following operator cannot follow. Alternatively, the operator being positioned to one side (or the other) of the handles is able to manoeuvre the edger around the perimeter of small irregular shaped flower beds, or to side step around obstacles such as a small bush, water tap, garden hose reel, mud puddle, or any other obstacle.

Therefore it is not necessary for the operator to always be positioned directly behind the edger, even if the edger moves along the straight "line of cut" C. Thus the operator can easily and quickly "side step" from one extreme on one side of both handles (position H in Fig. 3) through to the other extreme on the other side of both handles (position J in Fig. 3). This change in operator position can be carried out wherever it is necessary without altering or adjusting hand positions of the operator. That is, the position of the arms and body changes relative to the substantially unchanged position of the hands and edger. Thus the operator retains a full and comfortable control of the edger at all times.

Conversely, the "foot prints" marked H and J in Fig. 3 can also illustrate either one of two new positions into which an operator can move and also move the edger so that it resumes its position directly in front of the operator. This change in position naturally results in a change in direction of the "line of cut" C.

This unique separate and/or combined operator/edger flexibility can be carried out without any strain or bother to the operator and without tiring the operator.

The narrow profile of the front of the edger 1 also allows same to work into narrow confines of space, for example where a post or other structure is positioned close to a kerb or path. This is impossible for typical 3 (or 4) wheeled carriage type edgers or prior art single wheeled carriage devices.

Further, as best appreciated from Fig. 3, the foresight 19 enables the operator to accurately guide the edger along the edge of the kerb or path.

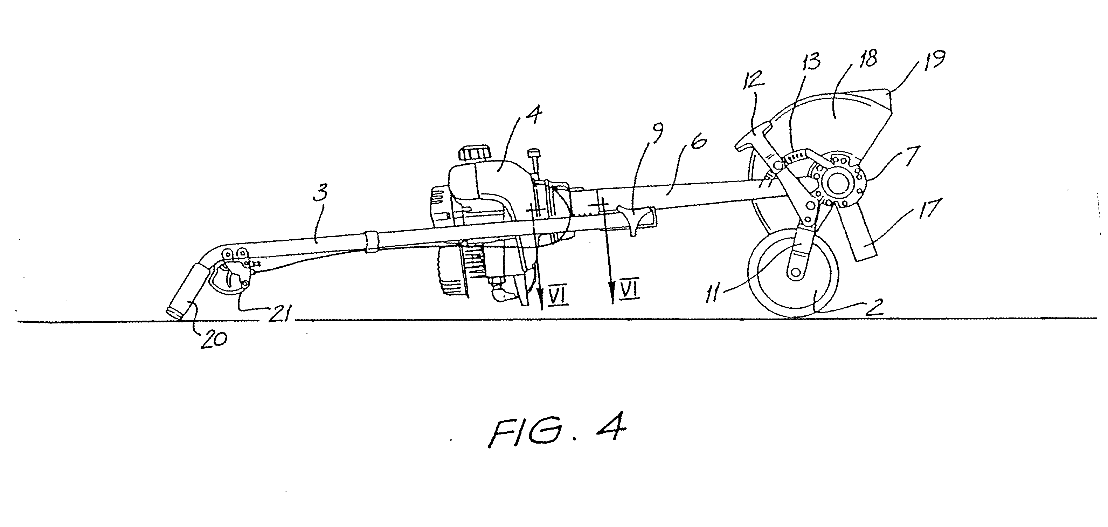

If the motor 4 is an internal combustion engine, then in order to start the engine, the handles 3 (or handle grips 20 if provided) can be rested on the ground as illustrated in Fig. 4. As a consequence, the edger 1 is positioned in a very stable and secure position, coming into contact with the ground only in three positions, namely the tips of each of the handles 3 (or handle grips 20) and the bottom of the wheel 2. In this position the cutter blade 17 is clear of the ground.

With the edger 1 in this stable position, the operator is able to pull the starting cord of the internal combustion engine 4 whilst being well away from the cutter blade 17 but adjacent the throttle control 21. As a consequence, if not braked against rotation as explained above, any spinning of the cutter blade 17 which may occur because of higher revolutions of the internal combustion engine at the time of starting, occurs with the operator safely positioned well away from the rotating cutter blade 17. After starting, the engine is idled and the automatic centrifugal clutch 57 then disengages the cutter blade 17 from the engine 4. The throttle trigger guard 79 prevents the throttle control 21 being inadvertently depressed by coming into contact with a bump or other object above the ground during starting.

The throttle trigger 71 also has a safety interlock as explained above in relation to Figs. 8 and 9, so that on idling, any accidental movement of the throttle trigger cannot occur, an operator's hand has to be holding the mechanism to operate same.

Of course, if the motor 4 is an electric motor, the throttle trigger with safety interlock then controls an electric on-off switch inside the motor housing and can be easily manipulated in the operating position. An electric motor can be either a mains operated AC or DC motor or a battery pack operated DC motor.

As an alternative to the preferred two handles 3 resting on the ground, a ground contacting leg stand (not illustrated), either fixed or retractable, can also be used when the edger 1 is at rest.

It is especially desirable for electric motors that the above described brake 14 be provided. This is because internal combustion engines have compression which quickly slows same after the throttle is released or returned to idle. However, electric motors have substantial inertia and no equivalent braking action. For this reason they continue to rotate for much longer periods of time after the power is switched off. For this reason the brake 14 is very desirable for electric motors. On release of the brake lever 26 by the operator, for any reason, the brake band 61 locks tight around the clutch drum 59 causing the blade 17 to quickly stop rotating.

A preferred feature which enables the expense of the brake 14 and all its associated components to be eliminated arises out of the combination of an internal combustion engine 4, centrifugal clutch 57 and gear box 7. This arises as follows. The internal combustion engine 4 itself quickly stops rotating if the throttle is released or returned to idle because of the compression of the engine 4. This means that the clutch shoes 58 quickly retract leaving the clutch drum 59 to free wheel. However, since the clutch drum 59 and shaft 56 are connected to the cutter blade 17 via the gear box 7, all these items rotate together.

Because of the gear ratio (1.5:1 to 8:1) between the cutter blade 17 and clutch drum 59 the inertia of the cutter blade 17 acts to drive via the gear box 7, the shaft 56 and clutch drum 59. In this way the rotational energy of the cutter blade 17 is quickly dissipated and the cutter blade 17 quickly stops rotating.

This result arises because of the frictional losses in the overall transmission and because of the inertia of the shaft, gears and clutch drum. Since these three items must be rotated at a higher speed than the cutter blade 17 because of the gear ratio, and the driving force is the momentum of the cutter blade 17, the cutter blade 17 quickly stops rotating. Practical experiments with a gear box having a less than 4:1 reduction, indicate that a 30 cc two-stroke engine running at full speed (7,500 rpm) will result in the cutter blade ceasing rotation in approximately 2.5 seconds after the engine throttle is released by the operator. This is well within the 3 second period specified in some jurisdictions and within which the blades of rotory lawnmowers must stop rotating. The regulations, or prespective regulations, can still be complied with but the expense of the brake is eliminated since the arrangement is inherently self-braking.

Irrespective of whether a brake for the cutter blade 17 is provided or not, the operation of the edger 1 is as follows. With the engine idling, the operator lifts both handles 3 in order to hold same with the arms relatively straight and extending directly towards the ground as illustrated in Fig. 2. The throttle control 21 can then be actuated to increase engine speed. The edger 1 is then wheeled along the path indicated by arrows C in Figs. 1 and 3 to commence the edging operation. It will be apparent from Fig. 3, in particular, that the cutter blade 17 is located in a plane which passes between the handles 3 and that the operator walks along a trodden path or line which passes substantially over the "line of cut" unless the edger 1 is deliberately tilted or longitudinally turned to alter course.

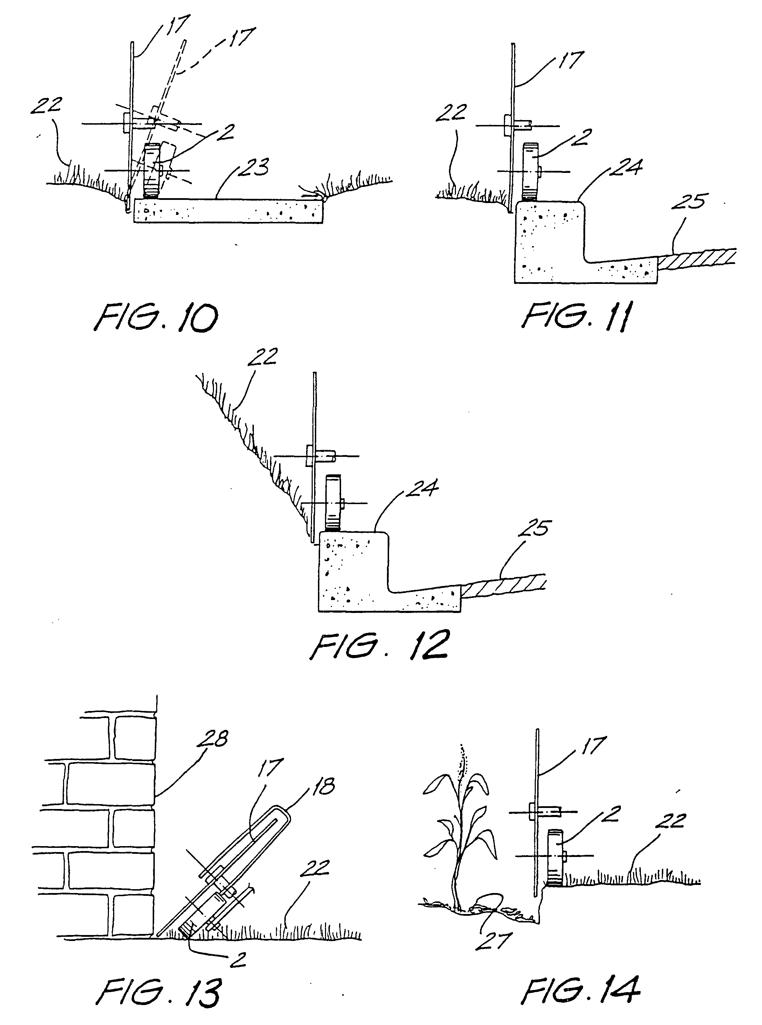

Several of the operational advantages of the edger 1 of the preferred embodiment are illustrated with respect to Figs. 10-14. In Fig. 10, the edger 1 is being used to edge the lawn 22 growing at the left side of a path 23. As indicated in Fig. 10 the wheel 2 is moved along the left edge of the path 23 adjacent the lawn 22 and the rotating cutter blade 17 provides the necessary edging action. The first advantage is that the cutter blade 17 can be easily and quickly tilted out of a vertical plane by twisting the frame about its longitudinal axis in order to provide a tilted cut, an adjustment to the cutting action, to miss any obstacle, to provide a closer or more distant cut, and so on.

Fig. 11 illustrates a second advantage able to be obtained by the edger 1 of the preferred embodiment over a conventional carriage supported lawn edger. Here the wheel 2 is being easily moved along the upper edge of a formed concrete kerb 24 of a gutter at the edge of a road 25. Again the cutter blade 17 edges the lawn 22. However, the prior art carriage devices are unable to be wheeled along the top of the kerb 24 since the three (or four) wheels cannot be accommodated on the narrow upper surface of the kerb 24 because of the side to side spacing between the wheels. This problem also occurs with the prior art single wheel carriage devices due to their cutters being located a substantial sideways distance from the wheel, generally on an outrigger device of some kind. Such carriages (irrespective of whether they have single or multiple wheels) can only be pushed (in the opposite direction) along the relatively rough grass. This is an onerous task-especially when long distances are involved such as arises with the edging of nature strips or verges alongside roads.

Fig. 12 illustrates an analogous situation to that of Fig. 11, but illustrates the procedure where the lawn 22 slopes towards the kerb 24. Under these circumstances, the wheel 2 can again be accommodated on the narrow top of the kerb 24. However, with the prior art carriage devices having to be wheeled on the grass, the grass slope of the lawn 22 would have the effect of tilting the entire apparatus and therefore moving the cutting device of that prior art apparatus out of the vertical plane to a substantial extent. Also when pushing forward such a prior art carriage edger, the carriage tends to continuously slide down the slope and this tendency has to be continually resisted by the operator providing an upward force component. This is both tiring as the operator has to adopt a "crab-like" or twisting motion and possibly walk in the gutter where parked vehicles can obstruct his path. It is also very dangerous as on a busy suburban road with moving traffic close to the kerb, the operator runs a substantial risk of being struck by a passing vehicle.

As seen in Fig. 13, the edger can be operated so as to edge grass or lawn 22 growing up against a vertical surface such as a wall 26. Here by laterally tilting the handles 3 and therefore the wheel 2, the cutter blade 17 is easily moved out of a vertical plane and so both simultaneously inclined and brought to bear adjacent the base of the wall 28 with a fast, simple, comfortable and easy movement requiring no physical effort. This is much more convenient when compared with the slower and more difficult blade tilting arrangement on those edgers that have a swivel arrangement for blade tilting arrangement.

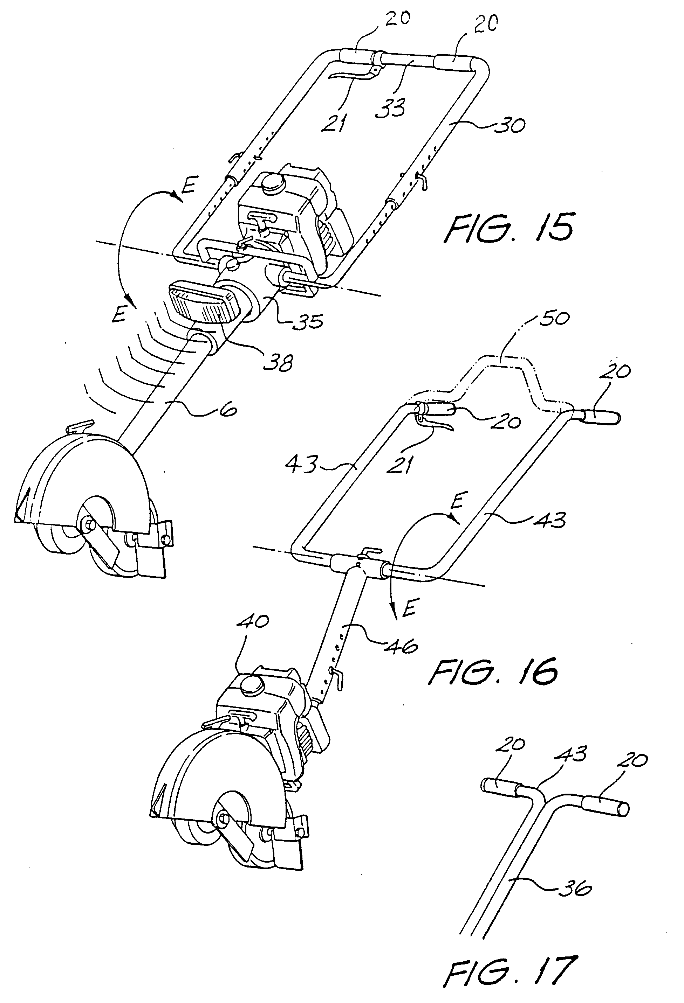

In Fig. 14 the use of the edger 1 to trim the side of a garden bed 27 (or golf bunker) is illustrated. Here the wheel 2 rolls over the relatively rough lawn 22 with ease whilst the cutter blade 17 cuts the desired edge to a level well below the grass surface. The wheel 2 is able to follow any irregularity in the ground surface in a way which a carriage device of three (or four) wheels cannot replicate since the carriage effectively "averages" the position of all wheels and thus "bounces" over irregularities.

It will be appreciated by those skilled in the art that the configuration of the edger 1 is inherently safe. In the event that the operator should stumble, the safety brake 14 and/or throttle control 21 is/are released, so the centrifugal clutch 57 disengages the cutter blade 17. This enables the edger 1 to roll forward and the handles 3 to drop to the ground. The safety interlock 74 on the throttle trigger 71 ensures that the throttle cannot be re-accelerated. This is a relatively safe situation with the cutter blade 17 safely raising out of, and above, the ground while it is quickly stopped and without the possibility of the blade dislodging debris towards the operator, or possibly dragging the apparatus forward against some other object or person etc.

Similarly, if the operator should fall over rearwardly for some reason such as tripping or slipping, then because the cutter blade 17 is the part furthest from the operator, and also because the wheel 2 is between the operator and the cutter blade 17, any rearward movement of the edger 1 is blocked by the wheel 2 coming into contact with the operator before the cutter blade 17 can strike the operator.

Turning now to Fig. 15, an alternative form of frame and handle 30 is illustrated. Rather than a Y-shaped frame 5 with two separate handles 3 as in Figs. 1-4, in the embodiment of Fig. 15 the frame 35 is generally T-shaped and the handle 30 takes the form of a generally rectangular structure which is both of adjustable length and pivotable in the direction indicated by arrows E by movement of the cross member 33 relative to the stem 6.

Fig. 15 also illustrates a forward facing flashing or blinking light 38. The light 38 can be energised via either a battery (not illustrated) or the magneto of the engine 4. The light 38 is arranged to flash on and off automatically whilst the engine is operating. This assists in the safety of those government employees on busy and/or narrow roads.

Similarly, Fig. 16 illustrates another embodiment in which the motor 40 is mounted adjacent the wheel 2 but with its centre of gravity either above the wheel 2 or towards the handles 43 but close to the wheel 2. In this configuration less of the weight of the motor 40 is carried by the operator but the centre of gravity of the edger 1 as a whole still remains located not only substantially centrally between the handles 43 so as to be in line with the wheel 2, but also between the wheel 2 and the handles 43. However, the motor 40 is closer to any dust generated by the lawn edge trimming. As a consequence, this configuration does not have the dust reducing advantage of the configuration of Fig. 1, and generally requires that an additional air filter be used for an internal combustion engine. However, this configuration can be of advantage where an electric motor is used. It is also be possible to have a small lightweight electric motor in front of the wheel 2, directly or indirectly connected to the blade 17, but the centre of gravity is still between the wheel 2 and handle grips 20 because of the length of the stem 46 and handles 43.

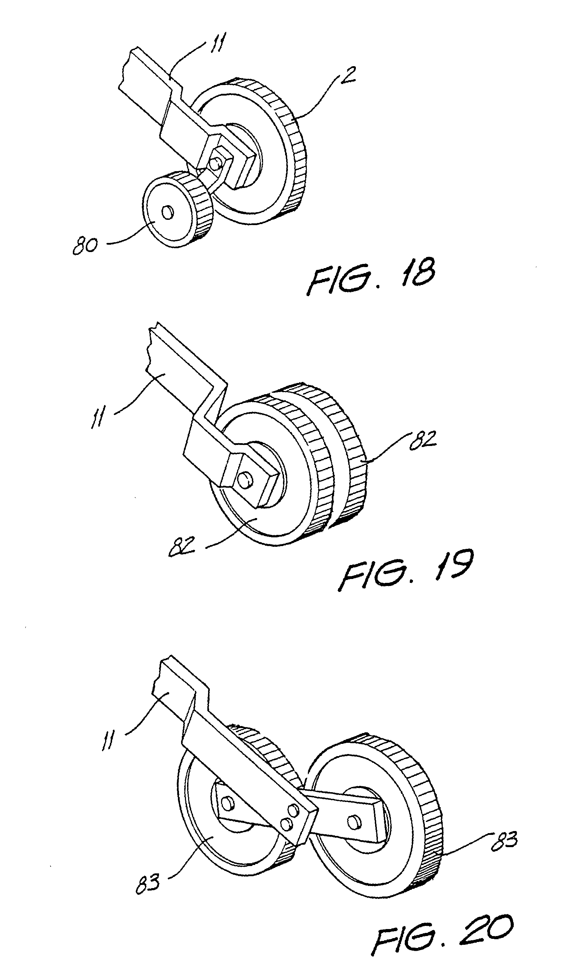

Also illustrated in Fig. 16 is an alternative U or C-shaped arrangement for the handles 43. Also in this embodiment an alternative stem 46 is provided which is adjustable in length. The handles 43 are adjustable in height. As indicated in Fig. 16, either a pair of handles 43 can be utilised, or a single handle 50 in the form of a hollow, substantially rectangular frame (as illustrated by broken lines). In a further variation, only one of the handles 43 can be provided but extended at the top to allow both handle grips 20 to be present. This is therefore a different C-shaped arrangement. In Fig. 17 a generally T-shaped handle stem 36 is illustrated. If desired, this can be made with a single rather than a dual stem.

In order to better edge in some difficult terrains such as a moderately steep grassed slope leading upto a retaining wall or fence, modified wheel arrangements can be advantageous. For example, as illustrated in Fig. 18 the wheel 2 can be provided with a pair of outrigger wheels 80 one to either side in the manner of "training wheels" used by young cyclists. Only one of the outrigger wheels 80 is illustrated in Fig. 18. Alternatively, as illustrated in Fig. 19, two narrow wheels 82 side-by-side but spaced slightly apart on the same axle can be used instead of wheel 2 to give improved "biting in" of the narrow wheel rims into soft soil on steeply sloping grass surfaces. Thirdly, as illustrated in Fig. 20, two in-line wheels 83 with a narrow gap between their co-planar rims can be used since these follow the intended route but provide additional traction.

The foregoing describes only some embodiments of the present invention and modifications, obvious to those skilled in the art, can be made thereto without departing from the scope of the present invention as claimed. For example, the cutter blade 17 can be replaced by a cutter disc or a nylon like filament. In addition, although the device of the present invention has been described in relation to lawn edging, the device also finds application in aerating lawns. In this application, a series of grooves are cut in a lawn in a criss-cross or cross-hatched pattern in order to provide the aeration effect.

## Claims

1. A powered machine steerable by an operator with both hands in the manner of a wheelbarrow, the machine comprising:
an elongate member (5,35,36,46); handle means (3,30,33,43,50) including grips (20); a ground-engaging wheel means (2,80,82,83); a cutting device (17); a power unit (4,40); and a power train (7,56,57);
wherein the handle means (3, 30, 33, 43, 50) is attached adjacent one end of the elongate member (5,35,36,46), the cutting device (17) is mounted adjacent the other end, forward of the ground-engaging wheel means (2,80,82,83), the power unit (4,40) is carried by the elongate member (5,35,36,46) and is locatable in front of an operator holding the grips (20), and the power train (7,56,57) interconnects the power unit (4,40) and the cutting device (17) and is enclosed by the elongated member (5,35,36,46),
characterised in that the cutting device (17) is rotatable in a plane parallel to the longitudinal axis of the elongate member (5,35,36,46) so that the machine can be used as a lawn edger, the ground-engaging wheel means (2,80,82,83) is adjacent said other end of the member (5,35,36,46), the machine's centre of gravity is intermediate the grips (20) and the ground-engaging wheel means (2,80,82,83), and the handle means (3,30,33,43,50) can be manipulated to twist the machine about said longitudinal axis, to tilt the cutting device (17) with respect to its vertical plane of rotation.

2. An edger as claimed in claim 1, having means (11,12,13) for adjusting the height of the cutting device relative to the wheel's axis of rotation.

3. An edger as claimed in claim 2, wherein the height adjustment means comprises an adjustment handle (12) resiliently biased towards a setting plate (13), wherein the handle and the setting plate are releasably engageable at a plurality of engaged positions, the height being adjustable to any of a plurality of predetermined heights each corresponding to one of the engaged positions.

4. An edger as claimed in any preceding claim, additionally comprising means (11,12,13) for adjusting the height of the cutting device relative to the ground, and a debris deflector (15) carried with the wheel, the height of the debris deflector relative to the ground being unchanged with operation of the height adjustment means.

5. An edger as claimed in claim 4, wherein the debris deflector is supported by an axle (10) about which the ground-engaging wheel rotates, the debris deflector preferably depending from, and preferably being pivotable relative to, the axle (10).

6. A powered lawn edger having a frame (5,35,36,46), a ground-engaging wheel (2,80,82,83) supporting the frame, a power unit (4,40) carried by the frame, a rotatable cutting device (17) connected to the power unit, a throttle (71) to increase or decrease the output of the power unit, and a throttle interlock mechanism (74), whereby the throttle is operable to increase said output above an idle speed only on immediately prior operation of the interlock mechanism (74), wherein the throttle comprises a pivotable throttle trigger (71), and the interlock mechanism comprises a pivotable interlock lever (74) which in its rest position (into which it is preferably urged by resilient biassing means (78)) blocks movement of the throttle trigger in a speed-increasing direction, the interlock lever being pivotable out of its rest position to permit the throttle lever to be moved in a speed-increasing direction.

7. An edger as claimed in any preceding claim, wherein the cutting device (17) is connected to the power unit by a transmission (7,16,56,57) including gear reduction, wherein the gear ratio between the power unit and the blade is from 1.5:1 to 8:1, preferably between 2.1:1 and 5:1, and most preferably about 4:1.

8. An edger as claimed in claim 7, wherein the cutting device (17) is mounted on the output shaft (16) of a gear box, the output shaft being at any angle, preferably approx. 90°, relative to the gear box input shaft.

9. An edger as claimed in any preceding claim, wherein the cutting device (17) is mounted for rotation on a shaft (1.6) which is located a fixed distance from the power unit (4,40) to which it is connected.

10. An edger as claimed in any preceding claim, wherein the wheel (2) rotates in a plane that is substantially parallel to, and closely spaced from, the plane in which the cutting device rotates.

11. An edger as claimed in any preceding claim, which has a stable rest position defined by the ground-engaging wheel means and either the grips or a stand means contacting the ground at spaced points.

12. An edger as claimed in claim 11, wherein the cutting device is incapable of contacting the ground when the edger is in the stable rest position.

## Patentansprüche

1. Motorgetriebene Maschine, die durch eine Bedienungsperson mit beiden Händen in Art und Weise einer Schubkarre lenkbar ist, wobei die Maschine umfaßt:
ein längliches Element (5, 35, 36, 46), eine Griffeinrichtung (3, 30, 33, 43, 50) einschließlich Handgriffe (20), ein am Boden aufsetzendes Radelement (2, 80, 82, 83), eine Schneidvorrichtung (17), eine Antriebseinheit (4, 40) und eine Kraftübertragung (7, 56, 57),
worin die Griffeinrichtung (3, 30, 33, 43, 50) in Nachbarschaft zu einem Ende des länglichen Elements (5, 35, 36, 46) befestigt ist, die Schneidvorrichtung (17) in Nachbarschaft zu dem anderen Ende vor dem am Boden aufsetzenden Radelement (2, 80, 82, 83) angebracht ist, die Antriebseinheit (4, 40) von dem länglichen Element (5, 35, 36, 46) getragen wird und vor der die Handgriffe (20) haltenden Bedienungsperson anbringbar ist und die Kraftübertragung (7, 56, 57) die Antriebseinheit (4, 40) und die Schneidvorrichtung (17) verbindet und durch das längliche Element (5, 35, 36, 46) umschlossen ist,
dadurch gekennzeichnet, daß die Schneidvorrichtung (17) in einer Ebene parallel zur Längsachse des länglichen Elements (5, 35, 36, 46) drehbar ist, so daß die Maschine als Rasenkantenschneider eingesetzt werden kann, das am Boden aufsetzende Radelement (2, 80, 82, 83) zu dem anderen Ende des Elements (5, 35, 36, 46) benachbart ist, der Schwerpunkt der Maschine sich zwischen den Handgriffen (20) und dem am Boden aufsetzenden Radelement (2, 80, 82, 83) befindet und die Griffeinrichtung (3, 30, 33, 43, 50) manipuliert werden kann, um die Maschine um die genannte Längsachse zu drehen, damit die Schneidvorrichtung (17) sich bezüglich ihrer vertikalen Drehebene neigt.

2. Kantenschneider wie in Anspruch 1 beansprucht mit einer Einrichtung (11, 12, 13) zur Höheneinstellung der Schneidvorrichtung relativ zur Drehachse des Rades.

3. Kantenschneider wie in Anspruch 2 beansprucht, worin die Höheneinstell-Einrichtung einen Einstellgriff (12) umfaßt, der federnd in Richtung einer Einstellplatte (13) vorgespannt ist, wobei der Griff und die Einstellplatte an vielen ineinandergreifenden Stellungen lösbar einrastbar sind und die Höhe auf jede von einer Vielzahl von vorherbestimmten Höhen einstellbar ist, wobei jede einer der ineinandergreifenden Stellungen entspricht.

4. Kantenschneider wie in irgendeinem vorhergehenden Anspruch beansprucht, der zusätzlich eine Einrichtung (11, 12, 13) zur Höheneinstellung der Schneidvorrichtung relativ zum Boden und eine mit dem Rad mitgeführte Kleinteil-Ablenkvorrichtung (15) umfaßt, wobei sich die Höhe der Kleinteil-Ablenkvorrichtung bei der Bedienung der Höheneinstell-Einrichtung relativ zum Boden nicht verändert.

5. Kantenschneider wie in Anspruch 4 beansprucht, worin die Kleinteil-Ablenkvorriclhtung von einer Achse (10) gestützt wird, um die sich das am Boden aufsetzende Rad dreht, wobei die Kleinteil-Ablenkvorrichtung vorzugsweise abhängt von und vorzugsweise schwenkbar ist relativ zur Achse (10).

6. Motorgetriebener Rasenkantenschneider mit einem Rahmen (5, 35, 36, 46), einem den Rahmen stützenden, am Boden aufsetzenden Rad (2, 80, 82, 83), einer durch den Rahmen getragenen Antriebseinheit (4, 40), einer mit der Antriebseinheit verbundenen, drehbaren Schneidvorrichtung (17), einer Drosselklappe (71) zur Leistungssteigerung oder -verminderung der Antriebseinheit und einem Drosselklappen-Sperrmechanismus (74), wodurch die Drosselklappe nur bei unmittelbar vorhergehender Bedienung des Sperrmechanismus (74) zur Steigerung der Leistung über die Leerlaufdrehzahl hinaus bedienbar ist, wobei die Drosselklappe einen drehbaren Drosselklappen-Auslöser (71) umfaßt und der Sperrmechanismus einen drehbaren Sperrhebel (74) umfaßt, der in seiner Ruheposition (in die er vorzugsweise durch eine federnde Vorspanneinrichtung (78) gezwungen wird) die Bewegung des Drosselklappen-Auslösers in Drehzahl erhöhender Richtung blockiert, wobei der Sperrhebel aus seiner Ruhestellung herausschwenkbar ist, um eine Bewegung des Gashebels in Drehzahl erhöhender Richtung zu ermöglichen.

7. Kantenschneider wie in irgendeinem vorhergehenden Anspruch beansprucht, worin die Schneidvorrichtung (17) mit der Antriebseinheit durch eine Kraftübertragung (7, 16, 56, 57) einschließlich einer Gangübersetzung verbunden ist, wobei das Übersetzungsverhältnis zwischen der Antriebseinheit und der Klinge 1,5:1 bis 8:1, bevorzugt zwischen 2,1:1 und 5:1 und am meisten bevorzugt etwa 4:1 beträgt.

8. Kantenschneider wie in Anspruch 7 beansprucht, worin die Schneidvorrichtung (17) an der Getriebe-Ausgangswelle (16) angebracht ist, wobei die Ausgangswelle sich in jedwedem Winkel und bevorzugt einem Winkel von etwa 90°C relativ zur Getriebe-Eingangswelle befinden kann.

9. Kantenschneider wie in irgendeinem vorhergehenden Anspruch beansprucht, worin die Schneidvorrichtung (17) zwecks Rotation an einer Welle (16) angebracht ist, die in einem festen Abstand von der Antriebseinheit (4, 40) angeordnet ist, mit der sie verbunden ist.

10. Kantenschneider wie in irgendeinem vorhergehenden Anspruch beansprucht, worin das Rad (2) sich in einer Ebene dreht, die im wesentlichen parallel und in engem Abstand zu der Ebene ist, in der die Schneidvorrichtung rotiert.

11. Kantenschneider wie in irgendeinem vorhergehenden Anspruch beansprucht, der eine stabile Ruheposition aufweist, die durch das am Boden aufsetzende Radelement und entweder die Handgriffe oder eine Stützeinrichtung definiert ist, die den Boden an beabstandeten Positionen berühren.

12. Kantenschneider wie in Anspruch 11 beansprucht, worin die Schneidvorrichtung den Boden nicht berühren kann, wenn sich der Kantenschneider in der stabilen Ruhestellung befindet.

## Revendications

1. Machine motorisée apte à être conduite par un opérateur, à l'aide des deux mains, à la manière d'une brouette, la machine comprenant:
un organe allongé (5, 35, 36, 46); un moyen à manche (3, 30, 33, 43, 50) comprenant des poignées (20); un moyen à roue (2, 80, 82, 83) venant en contact avec le sol; un dispositif de coupe (17); une unité de fourniture d'énergie (4, 40); et un train de transmission (7, 56, 57);
dans laquelle le moyen à manche (3, 30, 33, 43, 50) est attaché dans une position adjacente à une extrémité de l'organe allongé (5, 35, 36, 46), le dispositif de coupe (17) est monté dans une position adjacente à l'autre extrémité, en avant du moyen à roue (2, 80, 82, 83) venant en contact avec le sol, l'unité de fourniture d'énergie (4, 40) est portée par l'organe allongé (5, 35, 36, 46) et peut être placée en avant d'un opérateur tenant les poignées (20), et le train de transmission (7, 56, 57) relie l'unité de fourniture d'énergie (4, 40) et le dispositif de coupe (17) et est entouré par l'organe allongé (5, 35, 36, 46),
caractérisée en ce que le dispositif de coupe (17) peut tourner dans un plan parallèle à l'axe longitudinal de l'organe allongé (5, 35, 36, 46), de telle sorte que la machine peut être utilisée comme Coupe bordure, le moyen à roue (2, 80, 82, 83) venant en contact avec le sol est adjacent à ladite autre extrémité de l'organe (5, 35, 36, 46), le centre de gravité la machine est situé entre les poignées (20) et le moyen à roue (2, 80, 82, 83) venant en contact avec le sol, et le moyen à manche (3, 30, 33, 43, 50) peut être manipulé pour faire tourner la machine autour dudit axe longitudinal, pour incliner le dispositif de coupe (17) par rapport à son plan vertical de rotation.

2. Coupe bordure selon la revendication 1, présentant un moyen (11, 12, 13) pour ajuster la hauteur du dispositif de coupe par rapport à l'axe de rotation de la roue.

3. Coupe bordure selon la revendication 2, dans lequel le moyen d'ajustement en hauteur comprend une poignée d'ajustement (12) sollicitée de manière élastique en direction d'une plaque de réglage (13), dans lequel la poignée et la plaque de réglage peuvent être mises en prise de manière libérable, dans une pluralité de positions d'engagement, la hauteur étant ajustable à l'une quelconque parmi une pluralité de hauteurs prédéterminées qui correspondent chacune à l'une des positions d'engagement.

4. Coupe bordure selon l'une quelconque des revendications précédentes, comprenant en supplément un moyen (11, 12, 13) pour ajuster la hauteur du dispositif de coupe par rapport au sol, et un déflecteur de débris (15) porté par la roue, la hauteur du déflecteur de débris par rapport au sol restant inchangée lorsque le moyen d'ajustement en hauteur est actionné.

5. Coupe bordure selon la revendication 4, dans lequel le déflecteur de débris est porté par un axe (10) autour duquel tourne la route venant en contact avec le sol, le déflecteur de débris étant de préférence suspendu à l'axe (10), et pouvant de préférence pivoter par rapport à ce dernier.

6. Coupe bordure motorisé, présentant un bâti (5, 35, 36, 46), une roue (2, 80, 82, 83) venant en contact avec le sol et soutenant le bâti, une unité de fourniture d'énergie (4, 40) portée par le bâti, un dispositif de coupe rotatif (17) relié à l'unité de fourniture d'énergie, un accélérateur (71) pour augmenter ou diminuer la puissance délivrée par l'unité de fourniture d'énergie et un mécanisme (74) d'enclenchement de l'accélérateur, par lequel l'accélérateur peut être actionné pour augmenter ladite puissance au-dessus d'une vitesse de ralenti, uniquement si l'on a actionné le mécanisme d'enclenchement (74) juste avant, dans lequel l'accélérateur comprend une gâchette d'accélérateur pivotante (71), et le mécanisme d'enclenchement comprend un levier d'enclenchement pivotant (74) qui, dans sa position de repos (dans laquelle il est de préférence sollicité par un moyen élastique de sollicitation (78)), bloque le déplacement de la gâchette d'accélérateur dans une direction d'augmentation de la vitesse, le levier d'enclenchement pouvant pivoter hors de sa position de repos pour permettre au levier d'accélérateur d'être déplacé dans une direction d'augmentation de la vitesse.

7. Coupe bordure selon l'une quelconque des revendications précédentes, dans lequel le dispositif de coupe (17) est relié à l'unité de fourniture d'énergie par une transmission (7, 16, 56, 57) comprenant un réducteur à engrenages, dans lequel le rapport de réduction entre l'unité de fourniture d'énergie et la lame est de 1,5:1 à 8:1, de préférence de 2,1:1 à 5:1, et au mieux d'environ 4:1.

8. Coupe bordure selon la revendication 7, dans lequel le dispositif de coupe (17) est monté sur l'arbre de sortie (16) d'une boîte de transmission, l'arbre de sortie formant tout angle, de préférence d'environ 90°, par rapport à l'arbre d'entrée de la boîte de transmission.

9. Coupe bordure selon l'une quelconque des revendications précédentes, dans lequel le dispositif de coupe (17) est monté à rotation sur un arbre (16) qui est situé à une distance fixe de l'unité (4, 40) de fourniture d'énergie à laquelle il est relié.

10. Coupe bordure selon l'une quelconque des revendications précédentes, dans lequel la roue (2) tourne dans un plan qui est essentiellement parallèle au, et très proche du plan dans lequel tourne le dispositif de coupe.

11. Coupe bordure selon l'une quelconque des revendications précédentes, qui présente une position de repos stable définie par le moyen à roue venant en contact avec le sol et, soit les poignées, soit un moyen de support en contact avec le sol en des points espacés.

12. Coupe bordure selon la revendication 11, dans lequel le dispositif de coupe ne peut entrer en contact avec le sol lorsque le Coupe bordure se trouve dans la position de repos stable.
